# EUROPEAN PATENT SPECIFICATION

(11) **EP 3 128 415 B1**
(45) Date of publication and mention of the grant of the patent: **29.11.2017**
(21) Application number: 16180539.5
(22) Date of filing: 21.07.2016
(51) Int. Cl.: G06F 3/06, G06F 7/483, G06F 9/38, G06F 9/46

(54) **COMPUTING DEVICE, PROCESS CONTROL METHOD, AND PROCESS CONTROL PROGRAM**
BERECHNUNGSVORRICHTUNG, PROZESSSTEUERUNGSVERFAHREN UND PROZESSSTEUERUNGSPROGRAMM
DISPOSITIF INFORMATIQUE, PROCÉDÉ DE COMMANDE DE PROCESSUS ET PROGRAMME DE COMMANDE DE PROCESSUS

(30) Priority: 06.08.2015 JP 2015156471
(43) Date of publication of application: 08.02.2017
(73) Proprietor: FUJITSU LIMITED, 211-8588 Kanagawa (JP)
(72) Inventor: OKAMOTO, Takayuki, Kawasaki-shi, Kanagawa 211-8588 (JP)
(74) Representative: Ward, Gregory Peter

(56) References cited:
- EP-A2- 0 333 366
- EP-A2- 0 955 583
- WO-A1-00/45258
- WO-A1-99/54813
- WO-A1-2014/159123

## Description

The embodiments discussed herein are related to a computing device, a process control method, and a process control program.

Many central processing units (CPUs) have arithmetic units, such as floating point units (FPUs) or the like. For example, this type of CPU holds a state register that indicates whether an FPU is being used and executes exception handling if the CPU executes an instruction that uses an FPU in a context that is not being used by the FPU.

Furthermore, in an Operating System (OS) that supports multi processes, switching of processes using a CPU periodically occurs or occurs due to an event trigger. In accordance with the switching of the processes, the OS executes the switching of contexts (hereinafter, sometimes referred to as a context switch). For example, in order to resume a process in the future that is originally being executed in a CPU, the OS stores, in a memory, information that is stored in a register of the CPU; reads, from the memory, the information that is used by a process that is newly assigned; and restores the read information into the register.

Furthermore, at the time of context switch, the register in which saving or restoration of information occurs is referred to as a context register. For example, state registers or the like that manage the state of FPUs registers or context used at the time of arithmetic operation performed by FPUs are known as context registers.
Patent Document 1: Japanese National Publication of International Patent Application No. 2006-502470
Patent Document 2: International Publication Pamphlet No. WO 2009/090684
Patent Document 3: Japanese Laid-open Patent Publication No. 2008-059455

However, with the technology described above, it takes time to switch contexts. For example, with the CPU architecture having a large number of context registers, because an amount of saving or restoration is increased and the number of accesses to a memory is accordingly increased, it remarkably takes much more time.

Accordingly, it is desirable to provide a computing device, a process control method, and a process control program that can reduce the time taken to perform a context switch.

Aspects of embodiments provide computing devices, process control methods, and computer-readable recording media having stored therein process control programs, all as defined in the claims. The claims define the scope of the invention.

The invention is now described, by way of example only, with reference to the following figures, in which:
FIG. 1 is a schematic diagram illustrating an example of the overall configuration of a computing device according to a first embodiment;
FIG. 2 is a schematic diagram illustrating an example of the hardware configuration of the computing device according to the first embodiment;
FIG. 3 is a schematic diagram illustrating an example of a register use plan;
FIG. 4 is a schematic diagram illustrating an FPU register;
FIG. 5 is a functional block diagram illustrating the functional configuration of the computing device according to the first embodiment;
FIG. 6 is a flowchart illustrating the flow of restoration processing performed on a register;
FIG. 7 is a flowchart illustrating the flow of saving processing performed on the register;
FIG. 8 is a flowchart illustrating the flow of restoration destination selection processing;
FIG. 9 is a schematic diagram illustrating a specific example of register arrangement when a process 1 is executed;
FIG. 10 is a schematic diagram illustrating a specific example of a register use plan for the process 1 and a process 2;
FIG. 11 is a schematic diagram illustrating an example of the saving in another register group;
FIG. 12 is a schematic diagram illustrating an example of the saving in a memory; and
FIG. 13 is a schematic diagram illustrating a control example of a plurality of processes.

Preferred embodiments will be explained with reference to accompanying drawings. Furthermore, the present invention is not limited to the embodiments. The embodiments can be appropriately used in combination as long as processes do not conflict with each other.

### [a] First Embodiment

### Overall configuration

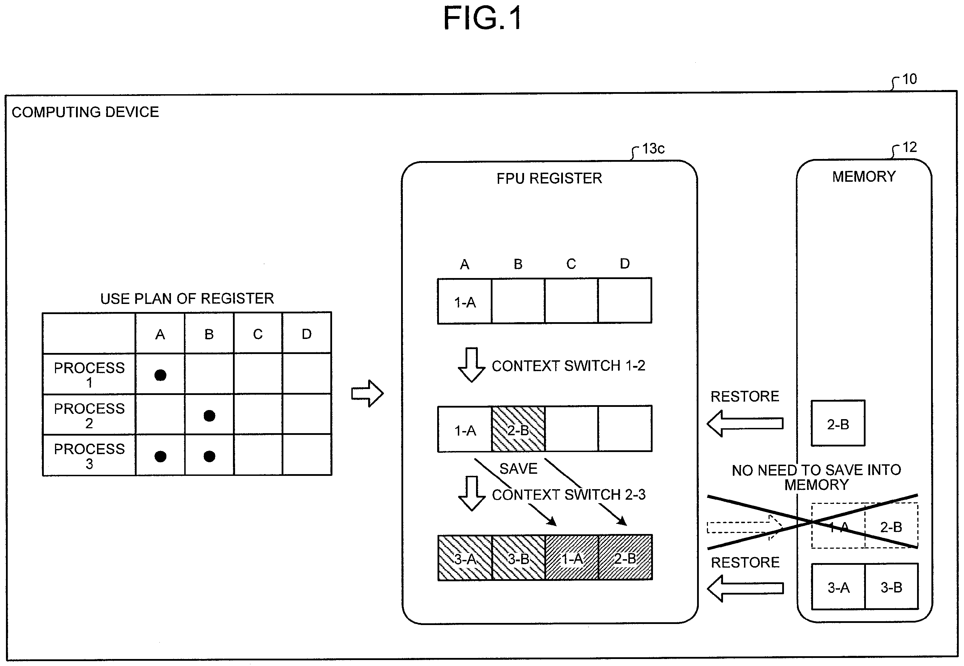

FIG. 1 is a schematic diagram illustrating an example of the overall configuration of a computing device according to a first embodiment. A computing device 10 illustrated in FIG. 1 is an example of a computer that includes a memory 12 and an FPU register 13c (hereinafter, sometimes simply referred to as a register). The memory 12 is an example of a storage device that stores therein data, a program, or the like that is used when various kinds of processing are executed and the FPU register 13c is an example of a register that is used for floating-point arithmetic. In below, a description will be given of an FPU register as an example; however, the configuration is not limited to this and another register, such as an integer register or the like, can also execute the same processing.

Furthermore, the computing device 10 supports multi processes and a plurality of processes share a processor. Thus, the computing device 10 executes, periodically or due to an event, the switching of the processes that use a CPU and executes a context switch at this time. Namely, the computing device 10 executes, in accordance with the switching of the processes, the saving or the restoration of the information stored in the FPU register 13c.

Specifically, as illustrated in FIG. 1, the computing device 10 includes four FPU registers 13c indicated by A, B, C, and D. The symbol indicated by 1-A or the like illustrated in FIG. 1 represents information in the register used by a process and represents, in a case of 1-A, the information in the register A for the process 1.

Furthermore, the computing device 10 holds a list of the register use plans for each of the process 1, the process 2, and a process 3. Specifically, in the list of the register use plan, the information that specifies that the process 1 that is executed first uses a register A, the process 2 that is executed subsequent to the process 1 uses a register B, and the process 3 that is executed subsequent to the process 2 uses the registers A and B is held.

In this state, first, the computing device 10 executes the process 1 that uses information (1-A) stored in the register A. Then, the computing device 10 executes a context switch 1-2 in accordance with the switching from the process 1 to the process 2. At this time, because the process 2 uses the register B, the computing device 10 reads information (2-B) stored in the memory 12 and restores the information (2-B) into the register B.

Then, in accordance with the switching from the process 2 to the process 3, the computing device 10 executes the context switch 2-3. At this time, because the process 3 uses the register A and the register B, the computing device 10 saves the information (1-A) stored in the register A and the information (2-B) stored in the register B.

Then, the computing device 10 detects a register that is not used by the process 3 and saves, in the detected register, the information (1-A) stored in the register A and the information (2-B) stored in the register B.

Specifically, the computing device 10 detects a register C and a register D, from among the registers A to D, as the registers that are not used by the process 3 that is targeted for the switching. Then, the computing device 10 saves, in the detected register C, the information (1-A) that is stored in the register A and saves, in the detected register D, the information (2-B) that is stored in the register B. Namely, the computing device 10 saves the information in the register that is not used by the subsequent process. Then, the computing device 10 reads information (3-A) stored in the memory 12, restores the information into the register A, reads information (3-B) stored in the memory 12, and restores the information into the register B.

In this way, when the computing device 10 saves the information in the register at the time of a context switch, if a register that is not used by a subsequent process is present, the computing device 10 saves the information in the subject register instead of the memory. Consequently, the computing device 10 can decrease the number of memory accesses and reduce the time taken to switch contexts.

### Hardware configuration

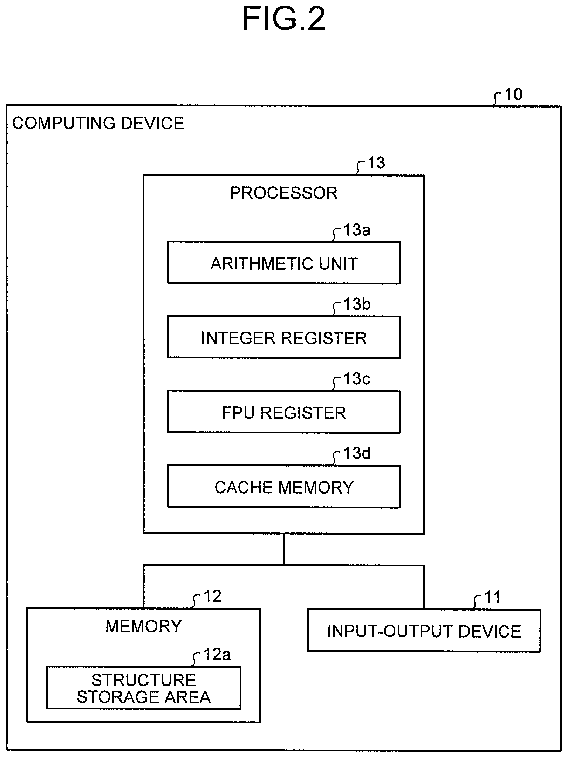

FIG. 2 is a schematic diagram illustrating an example of the hardware configuration of the computing device according to the first embodiment. As illustrated in FIG. 2, the computing device 10 includes an input-output device 11, the memory 12, and a processor 13. Furthermore, the hardware illustrated here is an example and, for example, another type of hardware, such as a hard disk, storage medium reader device, or the like, may also be used.

The input-output device 11 is a device that receives an input of various kinds of information and that outputs various kinds of information and is, for example, a mouse or a display. The memory 12 stores therein various kinds of information and is a storage device corresponding to the save destination of the context switch. Furthermore, the memory 12 includes therein a structure storage area 12a.

The structure storage area 12a is a memory area that stores therein the process structure that is created when a process is executed and that is deleted when the process is ended. The process structure is created for each process and holds information related to each of the processes. Specifically, the process structure stores therein the process structure including a process number, a register save area, memory management information, file management information, and a pointer to a register use plan.

Here, the process number is information that identifies a process. The save area is an area that is included in the memory 12 and that serves as the save destination of the information stored in the register in accordance with the context switch. Furthermore, in the register save area, a program counter is also stored. The memory management information stores therein the association relationship between virtual addresses and physical addresses in the memory 12. The file management information stores therein information or the like on a file in which a process is opened. The pointer to the register use plan is an access pointer to a register use plan that is loaded in the memory 12 or the like by an execution unit 22, which will be described later, when the execution unit 22 executes a program.

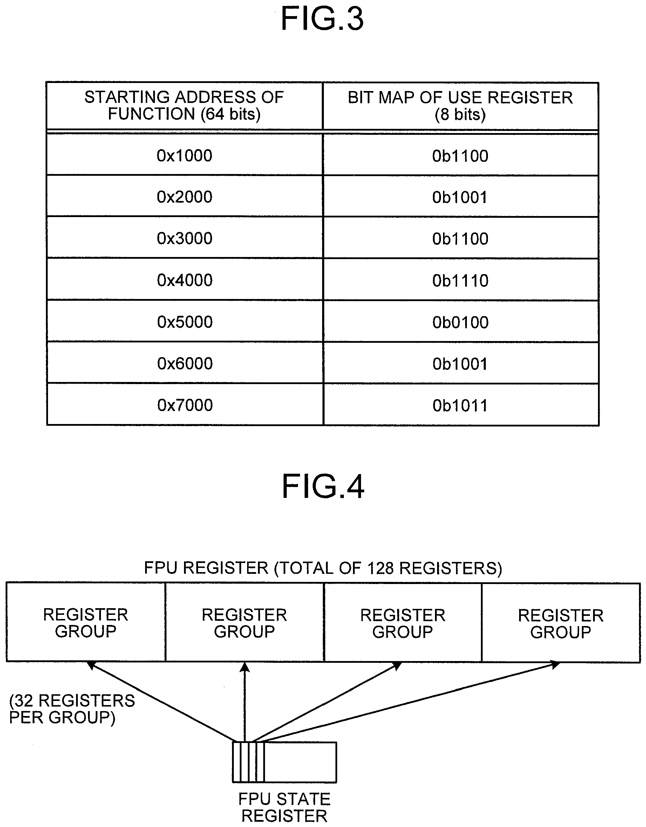

In the following, a register use plan will be described. FIG. 3 is a schematic diagram illustrating an example of a register use plan. The example of the register use plan illustrated in FIG. 3 includes the "starting address of a function and a bit map of a use register".

The "starting address of a function" is the starting virtual address whose length is defined per architecture and that is positioned at the top of the function included in a process. The "use register" is information that specifies a register that is used by a function. Here, the "use register" indicates whether a bit map represented by 1 bit for each register group is used. In this example, 8 bits are assigned; however, an arbitrary number may also be set in the register group.

The first line illustrated in FIG. 3 indicates that the function starting from "0x1000" plans to use the register group A and the register group B and the second line indicates that the function starting from "0x2000" plans to use the register group A and the register group D. Furthermore, in the embodiment, for convenience of explanation, there may be a case of describing with an example in which a process name is associated instead of the starting address of a function.

The processor 13 is a processing unit that manages the entirety of the computing device 10 and is, for example, a central processing unit (CPU), or the like. The processor 13 includes an arithmetic unit 13a, an integer register 13b, an FPU register 13c, and a cache memory 13d. Furthermore, the processor 13 includes, in addition to the hardware illustrated in the drawing, an FPU state register (not illustrated) that manages the current state of the FPU register 13c. Namely, the processor 13 updates the FPU state register in accordance with the update every time the processor 13 updates the state of the FPU register 13c. In this way, the processor 13 manages the state of the current context by using the FPU state register.

The arithmetic unit 13a is a device that executes integer arithmetic, floating-point arithmetic, or the like. The integer register 13b is a register that is used for the integer arithmetic. The FPU register 13c is a register that is used for floating-point arithmetic. The cache memory 13d is a high-speed memory that stores therein data or the like that is frequently used.

In the embodiment, the processor 13 divides the FPU register 13c into a plurality of groups and manages, as the management of the context, a state by determining whether the FPU register 13c is used for each of the groups, instead of determining whether the entirety of the FPU register 13c is used. Furthermore, in the embodiment, this group is sometimes referred to as a register group.

FIG. 4 is a schematic diagram illustrating an FPU register 13c. As illustrated in FIG. 4, the processor 13 divides the FPU register 13c with a total of 128 registers into groups with 32 registers and each of the groups is managed by the FPU state register. Namely, the processor 13 executes the management of the context by using the register group A, the register group B, the register group C, and the register group D each of which includes therein 32 registers. Furthermore, the number of divisions or each of the number described here is an example and is not limited to this. Furthermore, the FPU state register is a register that holds information indicating whether each of the register groups is used by the current process, i.e., information indicating whether information that is stored in each of the register groups is the information for the current process. This FPU state register is updated every time a user of the FPU register 13c is changed.

Furthermore, the processor 13 executes the FP owner (Lazy FPU Switching) function and manages each of the register groups by using the FP owner function. Instead of performing the saving or the restoration of the FPU register 13c at the time of context switch, by performing the postponement to the timing at which a program actually uses the FPU, the FP owner function shortens the time taken to perform a context switch regarding the program that does not use the FPU. Furthermore, the owner of the FPU is defined independent of the process that is being processed in the processor 13. Consequently, even if the timing that is independently of the context switch is used, the process at the save destination of the FPU register 13c can be specified. Furthermore, as an example, the reference information that is defined by the FP owner function and that is associated with the owner for each FPU is stored in a reference memory or the like.

### Functional configuration

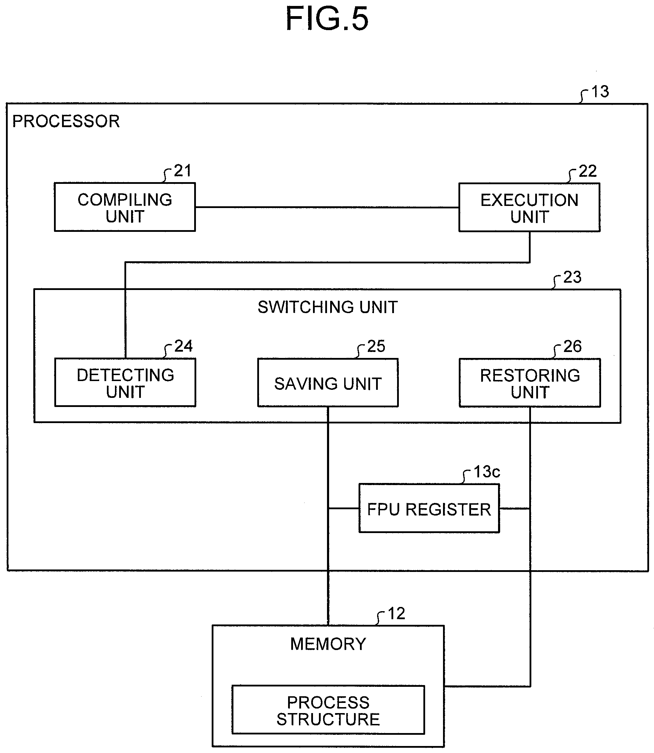

FIG. 5 is a functional block diagram illustrating the functional configuration of the computing device according to the first embodiment. As illustrated in FIG. 5, the processor 13 in the computing device 10 includes the FPU register 13c, a compiling unit 21, the execution unit 22, and a switching unit 23. Furthermore, the FPU register 13c has been described with reference to FIG. 2 or the like; a description thereof in detail will be omitted. The compiling unit 21, the execution unit 22, and the switching unit 23 are example of the process executed by the processor 13 or examples of the electronic circuits included in the processor 13.

The compiling unit 21 is a processing unit that compiles a program in which the execution content is described as each process. For example, the compiling unit 21 compiles the program and creates execution binary data.

At this point, the compiling unit 21 calculates, regarding each of the processes, the list of the register groups used for each function and creates a register use plan illustrated in FIG. 3. Then, the compiling unit 21 embeds the created register use plan in the header of the execution binary data. Furthermore, the compiling unit 21 is an example of a creating unit.

The execution unit 22 is a processing unit that executes a process. Specifically, the execution unit 22 executes the execution binary data created by the compiling unit 21 and executes a startup, a stop, a switch of each of the process. Furthermore, when the execution unit 22 executes a process, the execution unit 22 creates the process structure associated with the subject process. Furthermore, when the execution unit 22 executes the execution binary data, the execution unit 22 reads the register use plan from the header of the execution binary data and loads the register use plan in the memory 12.

Specifically, the execution unit 22 reads the execution binary data constituted by the register use plan and the program main body and loads the program main body in the memory 12. Subsequently, the execution unit 22 secures the area for storing the register use plan in the memory 12 and loads the register use plan that is read from the header of the execution binary data into the secured area. Then, the execution unit 22 adds the pointer to the area in which the register use plan is stored to the process structure. Furthermore, the execution unit 22 stores the program counter in the process structure in accordance with the execution, the stopping, or the like of each of the processes.

The switching unit 23 is a processing unit that includes a detecting unit 24, a saving unit 25, and a restoring unit 26 and that saves or restores the information stored in the FPU register 13c when the context switch is executed by these units in accordance with the switching of a process.

The detecting unit 24 is a processing unit that detects a save destination or a restoration destination of the information when the context switch is executed due to the occurrence of the switching of a process. Specifically, if information related to the register group that is accessed by a process is not stored, the detecting unit 24 detects the information targeted for the restoration and then restores or saves the subject information.

For example, by referring to the FPU state register, the FPU owner information, or the like, the detecting unit 24 determines whether the subject register group is being used and, if the subject register group is not being used, the detecting unit 24 requests the restoring unit 26 to execute the restoration processing by indicating the subject register group as the restoration destination. At this time, the detecting unit 24 may also notify the restoring unit 26 of the information that specifies the target register group or the process that is being executed.

In contrast, if the subject register group is being used, the detecting unit 24 detects the save destination register group that is not used by the subsequent process. Specifically, by using the use state of the FPU register 13c, the order of the process dispatch of the current and the next time slice, and the list of registers that are used by the processes at the next time slice, the detecting unit 24 detects a register group that is not used by the next process.

Furthermore, the use state of the FPU register 13c can be acquired from the FPU state register that is updated by the execution unit 22 every time the context switch is executed. Furthermore, the order of the process dispatch can be acquired from a process scheduler of the OS kernel. Furthermore, the list of the registers is the register use plan that is loaded in the memory 12.

In the following, a specific example of the detection processing will be described. As an example, a description will be given with an example in which, in a state in which the process 2, the process 1, and the process 2 are scheduled, a process is changed from the process 2 to the process 1. Furthermore, it is assumed that, at the timing at which the information in the register group C is used by the process 1, the information that is used by the process 2 is stored in the register group C and it is assumed that the saving target is the register group C.

### Switching technique 1

For example, the detecting unit 24 selects a register group that is not used by the switched process as the save destination and selects, if no register group that is not used by the switched process is present, the memory 12 as the save destination.

For example, the detecting unit 24 specifies, from the process structure of the process 1 of the information in the FPU state register, that the register group that is used by the process 1 that is supposed to be switched is the register group A, the register group B, and the register group C. Namely, the detecting unit 24 specifies that the switched process 1 does not use the register group D and then sets the register group D as the save destination.

Then, the detecting unit 24 notifies the saving unit 25 that the register group targeted for the saving is the register group C and that the register group that is the save destination is the register group D. At this time, the detecting unit 24 may also notify the saving unit 25 that the process of the execution target is the process 1.

### Switching technique 2

For example, the detecting unit 24 selects, from among the register groups that are not used by the switched process, the register group that is not used by further subsequent process as the register group save destination and selects, if no subject register group is present, the memory 12 as the save destination.

For example, the detecting unit 24 specifies, from the process structure of the process 1 or the information in the FPU state register, that the register group that is used by the process 1 to be switched is the register group A, the register group B, and the register group C. Furthermore, the detecting unit 24 specifies, from the process scheduler, that the subsequent process is the process 2. Then, the detecting unit 24 extracts, from the process structure associated with the process 2, the program counter and the pointer to the register use plan.

Then, the detecting unit 24 reads the register use plan for the process 2 from the memory 12 by using the pointer and specifies, by using the program counter, the function that is subsequently executed and the register group that is used by the subject function.

Here, if the register groups that are used when the process 2 is dispatched next time are the register group A and the register group B, the detecting unit 24 specifies the register group D that is not used by the subsequent process as the save destination. Then, the detecting unit 24 notifies the saving unit 25 that the register group that is targeted for the saving is the register group C and the register group that is the save destination is the register group D. At this time, the detecting unit 24 may also notify the saving unit 25 that the process that is the execution target is the process 1.

Furthermore, if the register groups that are used when the process 2 is dispatched next time are the register group A, the register group C, and the register group D, the detecting unit 24 specifies that no register group corresponding to the save destination is present. Then, the detecting unit 24 notifies the saving unit 25 that the register group targeted for the saving is the register group C and no save destination register group is present. At this time, the detecting unit 24 may also notify the saving unit 25 that the process of the execution target is the process 1.

The saving unit 25 is a processing unit that saves the information stored in the FPU register 13c in accordance with the context switch. Specifically, the saving unit 25 saves, in the save destination register group or the memory 12, the information that is already stored in the register group that is used by a new process.

For example, it is assumed that the saving unit 25 receives, from the detecting unit 24, information indicating that the register group targeted for the saving is the register group C, indicating that the register group of the save destination is the register group D, and indicting that the target process is the process 1.

At this time, the saving unit 25 refers to the FPU state register and determines whether the information is stored in the register group D that is the save destination. Here, if the information is not stored in the register group D, the saving unit 25 saves, in the register group D, the information is stored in the register group C targeted for the saving.

In contrast, if the information is stored in the register group D that is the save destination, the saving unit 25 refers to the FPU owner information in the memory and specifies that the process that uses the subject information is the process 2. Then, the saving unit 25 saves the information stored in the register group D in a register save area of the process structure of the process 2. Thereafter, the saving unit 25 stores, in the register group D, the information that is stored in the register group C. Furthermore, when the saving unit 25 saves the information in the process structure, the saving unit 25 can store, in associated manner, the information that specifies information related to which of the registers.

Furthermore, it is assumed that the saving unit 25 receives, from the detecting unit 24, information indicating that the register group targeted for the saving is the register group C, indicating that no save destination register group is present, and indicating that the process of the execution target is the process 1.

In this case, the saving unit 25 refers to the FPU owner information and specifies that the process that uses the information that is already stored in the register group C that is obtained before the context is switched is the process 2. Then, the saving unit 25 stores the information stored in the register group C in the register save area of the process structure that is associated with the process 2. Furthermore, when the saving unit 25 saves the information, the saving unit 25 can store the information by associating the information that specifies the information related to which of the registers.

After the processing described above, the saving unit 25 notifies the restoring unit 26 that the restoration instruction to the register group C in which the information has already been saved and the process targeted for the execution is the process 1.

The restoring unit 26 is a processing unit that executes restoration from the memory 12 to the FPU register 13c in accordance with the context switch. Specifically, the restoring unit 26 restores the subject information into the register group, from the memory 12, that is used by a new process.

In the example described above, it is assumed that the restoring unit 26 receives a notification from the detecting unit 24 indicating that the subject register group C that is used by the running process 1 is not used. In this case, the restoring unit 26 refers to the process structure of the notified process 1, refers to the FPU owner information and the FPU state register, and specifies the destination of storage for the subject information. Then, if the information is stored in the process structure, the restoring unit 26 reads the subject information from the register save area and restores the information into the notified register group C. Furthermore, if the information is stored in another register group, the restoring unit 26 reads the subject information from the other register group restores the information into the register group C.

Furthermore, if the restoring unit 26 receives an instruction to restore the information into the register group C from the saving unit 25, the restoring unit 26 reads the subject information from the register save area in the process structure of the subject process 1 and stores the information in the register group C.

### Flow of the processing

In the following, each of the pieces of the processing performed by the computing device will be described. Here, the restoration processing, the saving processing, and the restoration destination selection processing will be described.

### Flow of the restoration processing

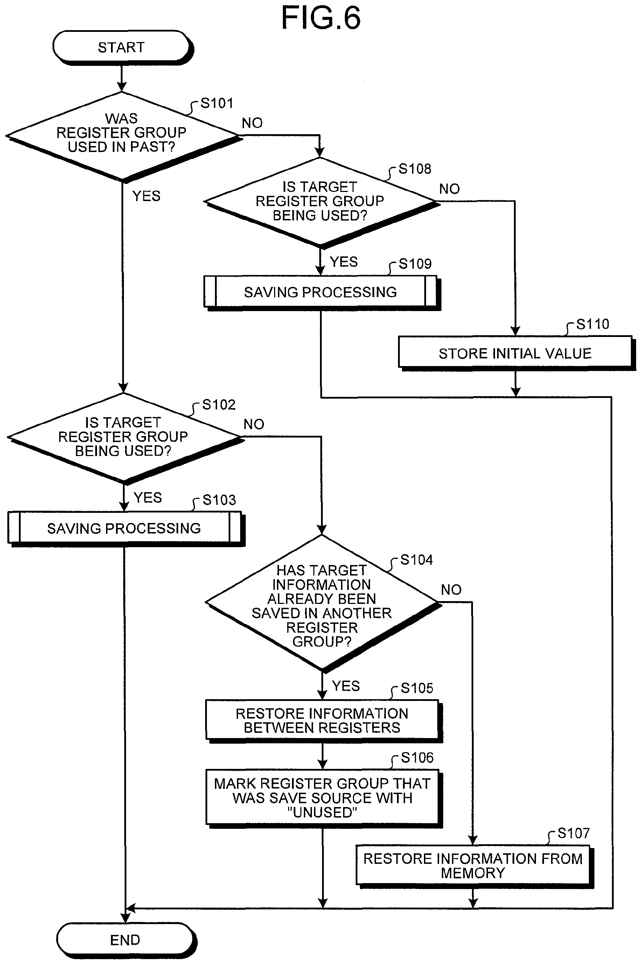

FIG. 6 is a flowchart illustrating the flow of restoration processing performed on a register. As illustrated in FIG. 6, if a context switch occurs in accordance with the switching of processes, the detecting unit 24 determines whether the register group that is the restoration target is the register group that was used in the past (Step S101). For example, the detecting unit 24 performs the determination by using, for example, a register use plan associated with the process that is being executed.

Subsequently, if the register group that is the restoration target is the register group that was used in the past (Yes at Step S101), the detecting unit 24 determines whether the register group targeted for the restoration is being used (Step S102). For example, the detecting unit 24 performs the determination by using, for example, the FPU state register or the like.

Then, if the detecting unit 24 determines that the register group targeted for the restoration is being used (Yes at Step S102), the detecting unit 24 and the saving unit 25 execute the saving processing (Step S103).

In contrast, if the detecting unit 24 determines that the register group targeted for the restoration is not being used (No at Step S 102), the restoring unit 26 determines whether the information related to the restoration target has already been saved in another register group (Step S104). For example, the restoring unit 26 performs the determination by using the FPU state register or the like.

Then, if the information related to the restoration target has already been saved in another register group (Yes at Step S104), the restoring unit 26 restores the information between the registers (Step S105). For example, the restoring unit 26 restores the information by storing the subject information in the target register group from the register group in which the information related to the restoration target is stored. Then, the restoring unit 26 marks, regarding the FPU state register, register group that was the save source with "unused" (Step S106).

Furthermore, at Step S104, if the information that is the restoration target has not already been saved in another register group (No at Step S104), the restoring unit 26 reads the subject information from the memory 12 and restores the subject information in the target register group (Step S107). For example, the restoring unit 26 reads the subject information from the register save area in the process structure associated with the subject process and stores the subject information in the target register group.

Furthermore, at Step S101, if the register group that is the restoration target is not the register group that was used in the past (No at Step S101), the detecting unit 24 determines whether the register group that is the restoration target is being used (Step S108).

Then, if the detecting unit 24 determines that the register group that is the restoration target is being used (Yes at Step S108), the detecting unit 24 and the saving unit 25 execute the saving processing (Step S109). In contrast, if the detecting unit 24 determines that the register group that is the restoration target is not being used (No at Step S108), the restoring unit 26 stores the initial value, such as 0 or the like, in the subject register group (Step S110).

### Flow of the saving processing

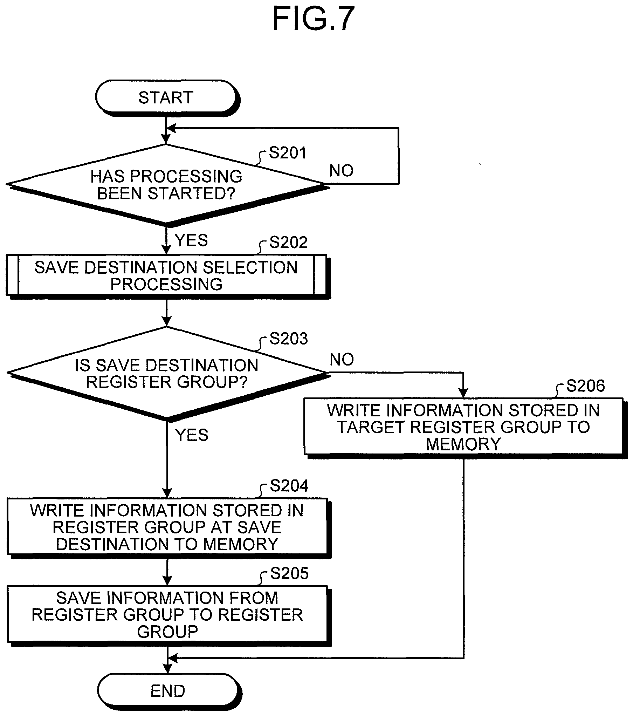

FIG. 7 is a flowchart illustrating the flow of saving processing performed on the register. Furthermore, this processing is executed at Step S103 or S109 illustrated in FIG. 6.

As illustrated in FIG. 7, when the detecting unit 24 starts the saving processing (Yes at Step S201), the detecting unit 24 executes the save destination selection processing (Step S202).

Thereafter, if it is determined that, from the result of the restoration destination selection processing, the save destination is the register group (Yes at Step S203), the saving unit 25 writes the information stored in the register group at the save destination to the memory 12 (Step S204). For example, the saving unit 25 writes the information stored in the register group at the save destination into the process structure of the subject process.

Thereafter, the saving unit 25 saves the information, which is stored in the register group functioning as the save target, in the register group that was specified as the save destination (Step S205).

In contrast, if it is determined that, from the result of the restoration destination selection processing, the save destination is not the register group but is the memory 12 (No at Step S203), the saving unit 25 saves, in the memory 12, the information stored in the register group functioning as the save target (Step S206). For example, the saving unit 25 writes the information stored in the register group functioning as the save target into the process structure of the subject process.

### Flow of the restoration destination selection processing

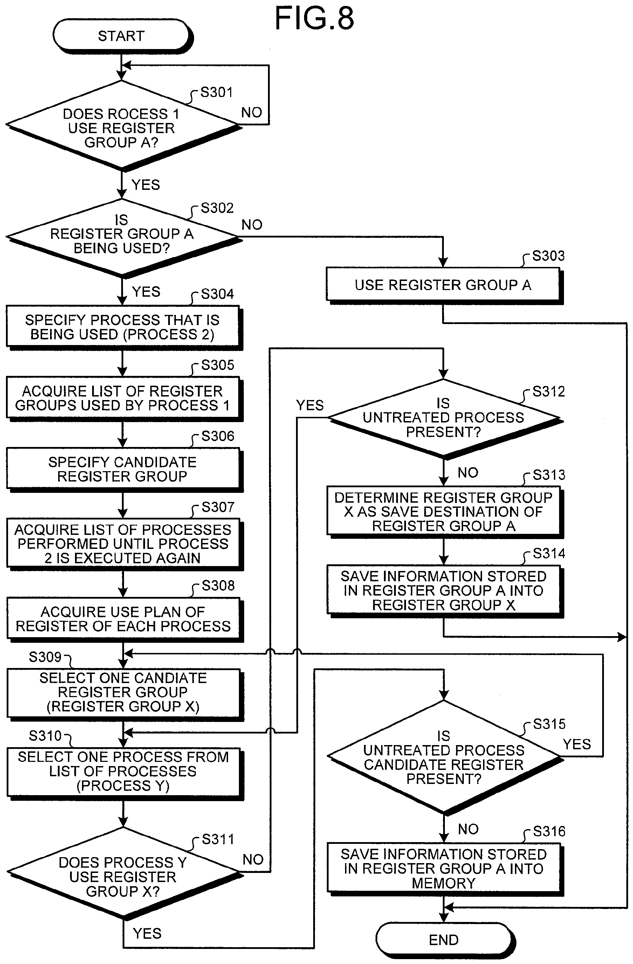

FIG. 8 is a flowchart illustrating the flow of restoration destination selection processing. Furthermore, this process is executed at Step S202 illustrated in FIG. 7. Here, a description will be given by using another example that is different from the example described above.

As illustrated in FIG. 8, if the detecting unit 24 determines that the process 1 that is the execution target uses the register group A (Yes at Step S301), the detecting unit 24 refers to the FPU state register or the like and determines whether the register group A is being used (Step S302).

If the detecting unit 24 determines that the register group A is not being used (No at Step S302), the detecting unit 24 determines to use the register group A without changing anything (Step S303).

In contrast, if the detecting unit 24 determines that the register group A is being used (Yes at Step S302), the detecting unit 24 refers to the FPU owner information, the FPU state register, or the like and determines that the process that currently uses the register group A is the process 2 (Step S304).

Subsequently, the detecting unit 24 acquires the list of the register groups used by the process 1 that is the execution target from the subject process structure (Step S305). Then, the detecting unit 24 inverts the acquired list of the register groups and specifies the list of the unused register groups of the process 1 as the candidate register (Step S306).

Thereafter, the detecting unit 24 acquires, from the process scheduler or the like, the list of the processes scheduled by the time at which the process 2 is dispatched again (Step S307). Subsequently, the detecting unit 24 acquires the register use plan of each of the acquired processes by using the pointers stored in the process structure (Step S308).

Then, the detecting unit 24 selects a single candidate register and sets the selected candidate register as the register group X (Step S309). Furthermore, the detecting unit 24 selects a single process from the list of the processes scheduled by the time at which the process 2 is dispatched again and sets the selected process as the process Y (Step S310).

Thereafter, the detecting unit 24 refers to the register use plan and determines whether the process Y uses the register group X (Step S311). Here, the detecting unit 24 determines that the process Y does not use the register group X (No at Step S311), the detecting unit 24 determines whether an untreated process is present from among the processes acquired at Step S307 (Step S312).

Then, if an untreated process is present (Yes at Step S312), the detecting unit 24 repeats the process at Step S310 and the subsequent processes. In contrast, if an untreated process is not present (No at Step S312), the detecting unit 24 determines the register group X as the save destination of the register group A (Step S313). Furthermore, if a plurality of register groups X is specified, the detecting unit 24 can select an arbitrary register group X.

Then, the saving unit 25 saves the information stored in the register group X in the memory 12 and saves the information stored in the register group A in the register group X (Step S314).

In contrast, if the detecting unit 24 determines that the process Y uses the register group X (Yes at Step S311), the detecting unit 24 determines whether an untreated process candidate register is present (Step S315).

Then, if the detecting unit 24 determines that an untreated process candidate register is present (Yes at Step S315), the detecting unit 24 performs the process at Step S309 and the subsequent processes. In contrast, if the detecting unit 24 determines that an untreated process candidate register is not present (No at Step S315), the saving unit 25 saves the information stored in the register group A into the memory 12 (Step S316).

### Specific example

In the following, specific examples of saving or restoring a register at the time of context switch will be described with reference to FIGS. to 12. The specific example illustrated below is an example in which a context switch occurs, at the timing at which the register group C is used, in the process 1 that is executed after a process is switched. Furthermore, it is assumed that, after the process 1, the process 2 is to be dispatched again.

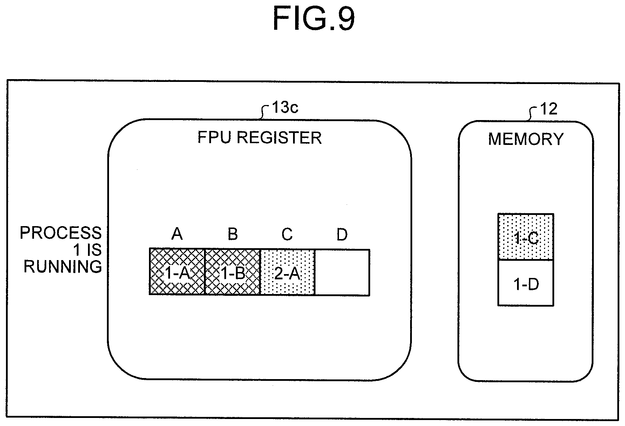

FIG. 9 is a schematic diagram illustrating a specific example of register arrangement when a process 1 is executed. As illustrated in FIG. 9, in the FPU register 13c, four register groups, i.e., the register group A to the register group D, are present. The process 1 uses the register group A, the register group B, and the register group C that are the shaded portions. Furthermore, in the register group C, information for the process 2 is stored and, in the register group D, information is not stored. Accordingly, here, a save of the register group C occurs.

Furthermore, if the switched process 1 saves the register group C when the process 1 is being executed, the computing device 10 may also save, as the save destination, the register group D that is not used by the process 1 (switching technique 1 described above). However, here, further considering the register use plan of the subsequent process, a saving technique that is more effective (switching technique 2 described above) will be described.

In the memory 12, information (1-C) that is used by the process 1 in the register group C and the information (1-D) that is used by the process 1 in the register group D are stored. Furthermore, here, for convenience of explanation, the diagram stored in the memory 12 is illustrated; however, to be precise, the information is stored in the register save area of the process structure of the process 1 provided in the memory 12.

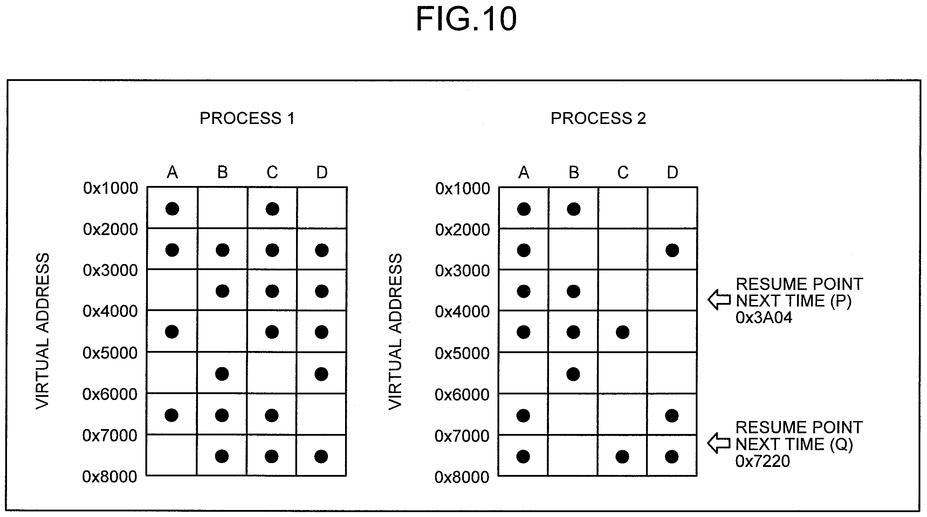

FIG. 10 is a schematic diagram illustrating a specific example of a register use plan for the process 1 and the process 2. As illustrated in FIG. 10, regarding each of the processes, the starting address of a function is associated with each of the register groups and stored. The black dots illustrated in FIG. 10 indicate the use of the respective register groups. For example, the black dots indicate that the function specified by the range of the virtual addresses "0x1000" to "0x2000" in the process 1 use the register groups A and C.

### Specific example 1: saving in the registers

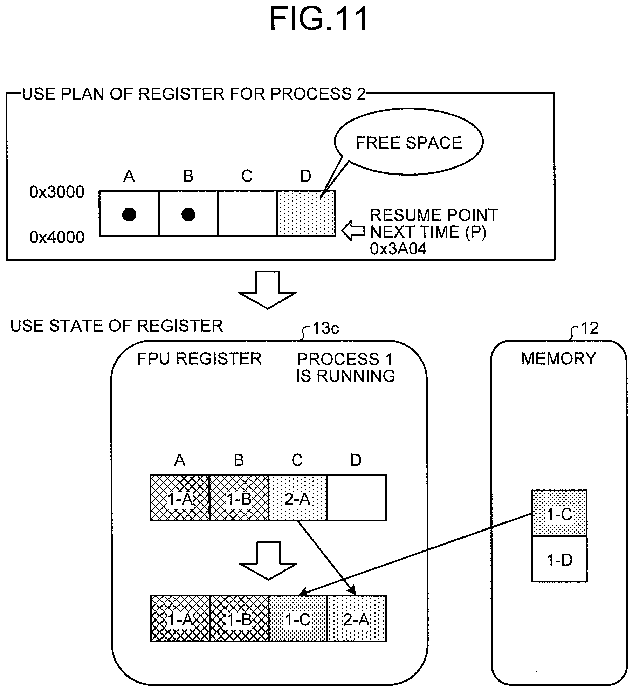

In the following, a saving example between registers will be described. FIG. 11 is a schematic diagram illustrating an example of the saving in another register group. First, as illustrated in FIG. 9, when the process 1 uses the register group C, because the information for the process 2 is stored, a context switch occurs. Then, the detecting unit 24 sets the register group D that is not used by the process 1 that is being executed as a candidate register.

Then, the detecting unit 24 specifies that the program counter of the process 2 is "0x3A04" on the basis of the process structure of the subsequent process 2. Then, as illustrated in FIG. 10, on the basis of the register use plan of the process 2 and the program counter "0x3A04" the detecting unit 24 specifies that the resume point when the process 2 is dispatched next is "P". Accordingly, the detecting unit 24 specifies that the register groups that are used when the process 2 is dispatched next are A and B.

Consequently, as illustrated in FIG. 11, because the register group D, which is a candidate register at the save destination, is not used by the subsequent process 2, the detecting unit 24 determines that the register group D is a free register group and decides the register group D as the save destination. Then, because no information is stored in the register group D at the save destination, the saving unit 25 save the information in the register group C targeted for the saving into the register group D. Thereafter, the restoring unit 26 restores the information (1-C) stored in the memory 12 into the register group C that has already been saved.

### Specific example 2: saving in the registers

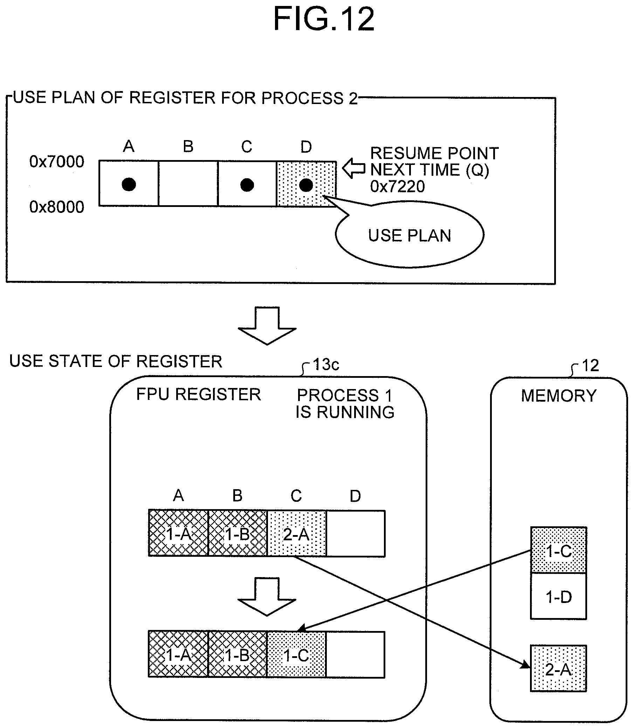

In the following, a saving example to the memory 12 will be described. FIG. 12 is a schematic diagram illustrating an example of the saving in a memory. First, as illustrated in FIG. 9, because the information for the process 2 is stored when the process 1 uses the register group C, a context switch occurs. Then, the detecting unit 24 sets the register group D that is not used by the process 1 that is being executed as a candidate register.

Then, the detecting unit 24 specifies, from the process structure of the subsequent process 2, that the program counter of the process 2 is "0x7220". Subsequently, as illustrated in FIG. 10, the detecting unit 24 specifies, from the register use plan of the process 2 and the program counter "0x7220", that the resume point when the process 2 is dispatched next is "Q". Accordingly, the detecting unit 24 specifies that the register groups that are used when the process 2 is dispatched next are A, C, and D.

Consequently, as illustrated in FIG. 12, because the register group D that is a candidate register is used by the subsequent process 2, the detecting unit 24 determines that no free register group is present and decides that the save destination is the memory 12. Then, the saving unit 25 saves the information in the register group C targeted for the saving in the memory 12. Thereafter, the restoring unit 26 restores the information (1-C) stored in the memory 12 into the register group C that has already been saved.

### Effect

As described above, even if the computing device 10 includes a large-sized context register, it is possible to reduce a transfer amount of register information to the memory 12. Consequently, the computing device 10 can reduce the time taken for a context switch between the plurality of processes.

Furthermore, it is conceivable to use a method of previously preparing a register used for the saving; however, the number of pieces of the hardware is increased and it is hardly a favorable method in view of a cost or the like. In contrast, the computing device 10 according to the first embodiment can detect a register group, without providing a register that is used for the saving, that is less frequently used from among the register groups that are normally used by processes in a shared manner and can set the detected register group as the register group for the saving. Namely, the computing device 10 can dynamically change, by using a process schedule or the like, the register group that is used for the saving. Consequently, the computing device 10 can reduce the number of pieces of the hardware, implement a reduction in cost, and implement effectively use the register groups. Furthermore, the computing device 10 can also reduce the processing load of the processor.

Furthermore, because the computing device 10 can dynamically create a register use plan and detect a use plan of the register group, the computing device 10 can detect a register group at the save destination without depending on a program.

In general, in a compiler, at the time of translation, the list of register groups that are used in a function is calculated for each function. Thus, because the compiler manages the mapping of a register and a variable or manages whether a register is used or not used regarding the program that is being translated, the compiler can list the registers that are used in the function. Furthermore, because the computing device 10 stores a register use plan in the header of the execution binary data, the computing device 10 can easily read a register use plan when the process is executed.

Furthermore, the computing device 10 can associate a register use plan with the program structure, if the process has been ended, the computing device 10 also can delete the register use plan from the memory 12 and can implement a reduction in memory usage.

Furthermore, because the computing device 10 can save information in a register group that is not used by a process after the switching, the computing device 10 can reduce the time taken for the saving. Furthermore, the computing device 10 can further save information in a register group that is not used by a subsequent process from among the register groups that are not used by the switched processes, the computing device 10 can efficiently use the register group and can further reduce a memory access.

### [b] Second Embodiment

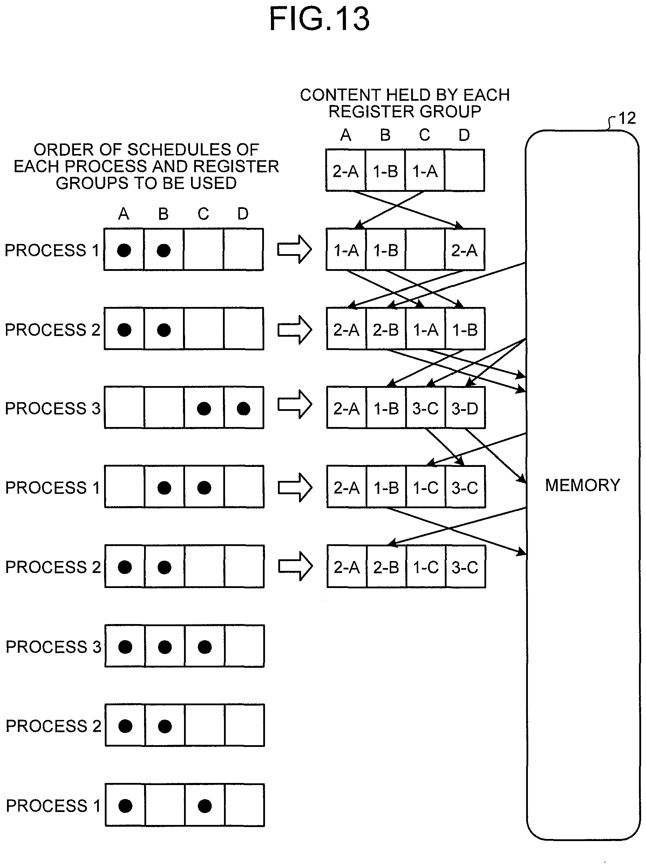

In the embodiment described above, two processes, i.e., the process 1 and the process 2, have been described; however, the processes are not limited to these and the same processing may also be used for three or more processes. FIG. 13 is a schematic diagram illustrating a control example of a plurality of processes. FIG. 13 indicates the relationship between the process schedules and the register groups and indicates the content of each of the stored register groups.

As illustrated in FIG. 13, if the computing device 10 switches to the process 1, the computing device 10 saves the information for the process 2 stored in the register group A into the register group D that is not used by the process 1. Then, the computing device 10 restores the information stored in the register group C into the register group A.

Subsequently, when the computing device 10 switches from the process 1 to the process 2, the computing device 10 saves the information for the process 1 that is used by the process 2 and that is stored in the register groups A and B into the register groups C and D that are not used by the process 2. Thereafter, the computing device 10 restores the information for the process 2 stored in the register group D and the information for the process 2 stored in the memory 12 into the register groups A and B, respectively.

Subsequently, when the computing device 10 switches from the process 2 to the process 3, the computing device 10 sets the register groups A and B that are not used by the process 3 to the candidate register at the save destination. However, the computing device 10 specifies that the process 2 that is executed later uses the register group A and specifies that the information that is stored by the current register group A is the information in the register group A for the process 2. Consequently, the computing device 10 sets the register group B as the register that can be saved.

Furthermore, the computing device 10 specifies the register groups C and D that are used by the process 3 as the save target; however, the computing device 10 specifies that the subsequent process 1 uses the information stored in the current register group D. Consequently, the computing device 10 retains, in the register with priority, the information stored in the register group D and saves the content held in the register groups B and C into the memory 12. Subsequently, the computing device 10 saves the information in the register group D held by the information in the register group B of the process 1 into the register group B. Then, the computing device 10 restores the information for the process 3 held by the memory 12 into each of the register groups C and D.

Subsequently, when the computing device 10 switches from the process 3 to the process 1, the computing device 10 sets the register groups A and D that are not used by the process 1 as the candidate register at the save destination. Then, because the information stored in the register group A is supposed to be used by the subsequent process 1, the computing device 10 decides only the register group D to be the save destination.

Furthermore, because the information for the process 3 is held in the register group C that is planned to be used by the process 1, the computing device 10 decides the register group C as the target for the saving. Then, after the computing device 10 saves the information held in the register group D that is a candidate register in the memory 12, the computing device 10 saves the information for the process 3 held in the register group C into the register group D. Thereafter, the computing device 10 restores the information for the process 1 held in the memory 12 into the register group C.

Subsequently, when the computing device 10 switches from the process 1 to the process 2, the computing device 10 sets the register groups C and D that are not used by the process 2 as the candidate registers at the save destination. Then, because the information for the process 1 is held in the register group B that is supposed to be used by the process 2, the computing device 10 decides the register group B as the target for the saving.

Normally, after the computing device 10 saves the information held in the register groups C or D that is a candidate register into the memory 12, the computing device 10 saves the information for the process 1 held by the register group B into the register group C or D. However, the computing device 10 specifies that the information held by the register groups C and D is the information that is used by the subsequent process.

Consequently, the computing device 10 determines, if the information stored in the register group D that is a candidate register is held in the register, that the switching time can be further reduced at the time of switching the process 3 that is executed thereafter. Accordingly, after the computing device 10 saves the information in the register group B that is targeted for the saving into the memory 12, the computing device 10 restores the information for the process 2 held in the memory 12 into the register group B.

In this way, even if three or more processors are used, the computing device 10 can perform the process in the same manner described in the first embodiment. Furthermore, the computing device 10 can decide the save destination by understanding the use plan of the subsequent process and the further subsequent process. Consequently, the computing device 10 can further effectively use the register groups and can implement a reduction in memory access.

### [c] Third Embodiment

In the above explanation, a description has been given of aspects of the embodiments according to the present invention; however, the present invention may also be implemented with various kinds of aspects of embodiments other than the aspects of embodiments described above. Therefore, another embodiment will be described below.

### Use plan

In the embodiments described above, an example of automatically creating a register use plan or a process schedule has been described; however, the embodiments are not limited to these. For example, the computing device 10 may also use a register use plan or a process schedule that is manually created by a program developer or the like.

### Register

In the embodiments described above, an example of using a register group has been described; however, the embodiments are not limited to these and may also perform execution for each register. Furthermore, in the embodiments described above, an example of executing an FP owner function has been described; however, the embodiments are not limited to these and, even if normal process switching is performed, the same processing can be performed.

### Example of saving

In the embodiments described above, an example of saving information in an unused register when a process is switched has been described; however, even at the time of switching to the subsequent process, it is also possible to determine whether a register is saved. For example, if the register in which information is saved in accordance with the switching of processes is used for the subsequent process, the information is further saved in a free register or a free memory.

### System

Furthermore, the components of each device illustrated in the drawings are not always physically configured as illustrated in the drawings. In other words, the components may also be configured by separating or integrating any of the devices. Furthermore, all or any part of the processing functions performed by each device can be implemented by a CPU and by programs analyzed and executed by the CPU or implemented as hardware by wired logic.

Of the processes described in the embodiment, the whole or a part of the processes that are mentioned as being automatically performed can also be manually performed, or the whole or a part of the processes that are mentioned as being manually performed can also be automatically performed using known methods. Furthermore, the flow of the processes, the control procedures, the specific names, and the information containing various kinds of data or parameters indicated in the above specification and drawings can be arbitrarily changed unless otherwise stated. For example, each of the processing units included in the switching unit 23 may also arbitrarily be integrated or separated and the detecting unit 24 may also further execute the processing that is executed by the saving unit 25.

Furthermore, by reading and executing the program, the computing device 10 operates as an information processing apparatus that executes a process control method. Namely, the computing device 10 executes a program that executes the same function as that performed by the compiling unit 21, the execution unit 22, and the switching unit 23. Consequently, the computing device 10 can execute a process that executes the same process as that performed by the compiling unit 21, the execution unit 22, and the switching unit 23. Furthermore, the program mentioned in the embodiment is not limited to be executed by the computing device 10. For example, the present invention may also be similarly used in a case in which another computer or a server executes a program or in which another computer and a server cooperatively execute the program with each other.

The program can be distributed via a network, such as the Internet. Furthermore, the program is stored in a computer-readable recording medium, such as a hard disk, a flexible disk (FD), a CD-ROM, an MO, and a DVD. Furthermore, the program can also be implemented by a computer reading the program from the recording medium.

According to an aspect of the embodiments, it is possible to reduce the time taken to perform a context switch.

## Claims

1. A computing device (10) comprising:
a plurality of registers (13c) that store therein information that is used by each process to execute processing;
a saving unit (25) that saves, when a process which is executed is switched from a first process to a second process and when the second process does not plan to use a second register in the plurality of registers (13c), information stored in a first register that is being used by the first process into the second register and that saves, when the second process plans to use the second register, information stored in the first register into a storage device (12); and
a detecting unit (24) that detects the second register from among the plurality of registers (13c) by using plan information in which starting addresses of functions included in the second process are associated with information in the registers that are used by the function.

2. The computing device (10) according to claim 1, wherein
when the second register is detected by the detecting unit (24), the saving unit (25) saves the information stored in the first register into the second register and, when the second register is not detected by the detecting unit (24), the saving unit saves the information stored in the first register into the storage device (12).

3. The computing device according to claim 2, wherein the detecting unit (24) extracts, from the plan information on the basis of a program counter that indicates a start position of the second process, plan registers that are planned to be used by the second process and detects, as the second register, a register that is not included in the plan registers.

4. The computing device according to claim 2, further comprising a compiling unit (21) that creates, when a program in each of which the content of each of the processes is described is compiled, the plan information by extracting information that is stored in a register and that is used by each of the functions for each function and that adds the plan information to execution binary data of the program, wherein
when the program is executed, the detecting unit acquires the plan information from the execution binary data.

5. The computing device according to claim 3, wherein the detecting unit (24) extracts, from the plan information associated with a third process that is executed after the second process, on the basis of a program counter that indicates a start position of the third process, plan registers that are planned to be used by the third process and detects, as the second register from among the plan registers that are associated with the second process, a plan register that is not included in the plan registers associated with the third process.

6. The computing device according to claim 1, wherein, when a process is switched from the second process to a third process that uses the first register, the saving unit (25) saves, when the third process does not plan to use a third register, information stored in the first register that is being used by the first process into the third register and saves, when the third process plans to use the third register, information stored in the first register into the storage device (12).

7. A process control method comprising:
saving, when a process which is executed is switched from a first process to a second process and when the second process does not plan to use a second register in a plurality of registers (13c) that store therein information that is used by each process to execute processing, information stored in a first register that is being used by the first process into the second register; and
saving, when the second process plans to use the second register, information stored in the first register into a storage device (12),
wherein the second register from among the plurality of registers (13c) is detected by using plan information in which starting addresses of functions included in the second process are associated with information in the registers that are used by the function..

8. A computer-readable recording medium having stored therein a process control program that, when executed, causes the computing device according to claim 1 to execute a control process comprising:
saving, when a process which is executed is switched from a first process to a second process and when the second process does not plan to use a second register in a plurality of registers (13c) that store therein information that is used by each process to execute processing, information stored in a first register that is being used by the first process into the second register; and
saving, when the second process plans to use the second register, information stored in the first register into a storage device (12),
wherein the second register from among the plurality of registers (13c) is detected by using plan information in which starting addresses of functions included in the second process are associated with information in the registers that are used by the function.

## Patentansprüche

1. Berechnungsvorrichtung (10), aufweisend:
mehrere Register (13c), die Informationen speichern, die von jedem Prozess dazu verwendet werden, eine Verarbeitung auszuführen;
eine Speichereinheit (25), die, wenn ein Prozess, der ausgeführt wird, von einem ersten Prozess zu einem zweiten Prozess umgeschaltet wird, und wenn der zweite Prozess nicht plant, ein zweites Register der mehreren Registern (13c) zu verwenden, Information, die in einem erstes Register gespeichert ist, das von dem ersten Prozess verwendet wird, in das zweite Register speichert, und, wenn der zweite Prozess plant, das zweite Register zu verwenden, Information,
die in dem ersten Register gespeichert ist, in einer Speichervorrichtung (12) speichert; und
eine Erfassungseinheit (24), die das zweite Register aus den mehreren Registern (13c) unter Verwendung von Planinformationen erfasst, in denen Startadressen von Funktionen, die in dem zweiten Prozess enthalten sind, Informationen in den Registern zugeordnet sind, die von der Funktion verwendet werden.

2. Berechnungsvorrichtung (10) nach Anspruch 1, wobei
wenn das zweite Register von der Erfassungseinheit (24) erfasst wird, die Speichereinheit (25) die Information, die in dem ersten Register gespeichert ist, in das zweite Register speichert, und wenn das zweite Register nicht von der Erfassungseinheit (24) erfasst wird, die Speichereinheit die Information, die in dem ersten Register gespeicherte ist, in der Speichervorrichtung (12) speichert.

3. Berechnungsvorrichtung nach Anspruch 2, wobei die Erfassungseinheit (24), aus den Planinformationen, auf der Basis eines Programmzählers, der eine Startposition des zweiten Prozesses anzeigt, Planregister extrahiert, für die nicht geplant ist, von dem zweiten Prozess verwendet zu werden, und als das zweite Register ein Register erfasst, das nicht in den Planregistern enthalten ist.

4. Berechnungsvorrichtung nach Anspruch 2, ferner aufweisend eine Kompilierungseinheit (21), die, wenn ein Programm, in jedem davon der Inhalt jedes der Prozesse beschrieben ist, kompiliert wird, die Planinformationen für jede Funktion durch Extrahieren von Information erzeugt, die in einem Register gespeichert ist und die von jeder der Funktionen verwendet wird, und die die Planinformationen zu binären Ausführungsdaten des Programms hinzufügt, wobei wenn das Programm ausgeführt wird, die Erfassungseinheit die Planinformationen aus den binären Ausführungsdaten erzeugt

5. Berechnungsvorrichtung nach Anspruch 3, wobei die Erfassungseinheit (24), aus der Planinformation, die einem dritten Prozess zugeordnet ist, der nach dem zweiten Prozess ausgeführt wird, basierend auf einen Programmzähler, der eine Startposition des dritten Prozesses anzeigt, Planregister extrahiert, die planmäßig von dem dritten Prozess verwendet werden sollen, und als zweites Register aus den Planregistern, die dem zweiten Prozess zugeordnet sind, ein Planregister erfasst, das nicht in den Planregistern enthalten ist, die dem dritten Prozess zugeordnet sind.

6. Berechnungsvorrichtung nach Anspruch 1, wobei, wenn ein Prozess von dem zweiten Prozess auf einen dritten Prozess umgeschaltet wird, der das erste Register verwendet, die Speichervorrichtung (25), wenn der dritte Prozess nicht plant, ein drittes Register zu verwendet, Information, die in dem ersten Register gespeichert ist, das von dem ersten Prozess verwendet wird, in das dritte Register speichert, und, wenn der dritte Prozess plant, das dritte Register zu verwenden, Information, die in dem ersten Register gespeichert ist, in der Speichervorrichtung (12) speichert.

7. Prozesssteuerungsverfahren, aufweisend:
Speichern, wenn ein Prozess, der ausgeführt wird, von einem ersten Prozess zu einem zweiten Prozess umgeschaltet wird, und wenn der zweite Prozess nicht plant, ein zweites Register von mehreren Registern (13c) zu verwenden, die Informationen speichern, die von jedem Prozess dazu verwendet werden, eine Verarbeitung auszuführen, von Information, die in einem ersten Register gespeichert ist, das von dem ersten Prozess verwendet wird, in das zweite Register;
Speichern, wenn der zweite Prozess plant, das zweite Register zu verwenden, von Information, die in dem ersten Register gespeichert ist, in eine Speichervorrichtung (12),
wobei das zweite Register unter den mehreren Registern (13c) unter Verwendung von Planinformationen erfasst wird, in denen Startadressen von Funktionen, die in dem zweiten Prozess enthalten sind, Informationen in den Registern zugeordnet werden, die von der Funktion verwendet werden.

8. Computerlesbares Aufzeichnungsmedium mit einem darin gespeicherten Prozesssteuerungsprogramm, das bei Ausführung die Berechnungsvorrichtung gemäß Anspruch 1 veranlasst, einen Steuerungsprozess auszuführen, der aufweist
Speichern, wenn ein Prozess, der ausgeführt wird, von einem ersten Prozess zu einem zweiten Prozess umgeschaltet wird, und wenn der zweite Prozess nicht plant, ein zweites Register von mehreren Registern (13c) zu verwenden, die Informationen speichern, die von jedem Prozess dazu verwendet werden, eine Verarbeitung auszuführen, von Information, die in einem ersten Register gespeichert ist, das von dem ersten Prozess verwendet wird, in das zweite Register; Speichern, wenn der zweite Prozess plant, das zweite Register zu verwenden, von Information, die in dem ersten Register gespeichert ist, in eine Speichervorrichtung (12),
wobei das zweite Register unter den mehreren Registern (13c) unter Verwendung von Planinformationen erfasst wird, in denen Startadressen von Funktionen, die in dem zweiten Prozess enthalten sind, Informationen in den Registern zugeordnet werden, die von der Funktion verwendet werden.

## Revendications

1. Dispositif informatique (10) comprenant :
une pluralité de registres (13c) qui stockent des informations qui sont utilisées par chaque processus afin d'exécuter un traitement ;
une unité de sauvegarde (25) qui sauvegarde, lorsqu'un processus qui est exécuté est permuté d'un premier processus en un deuxième processus et lorsque le deuxième processus ne planifie pas d'utiliser un deuxième registre de la pluralité de registres (13c), des informations stockées dans un premier registre qui est utilisé par le premier processus dans le deuxième registre et qui sauvegarde, lorsque le deuxième processus planifie d'utiliser le deuxième registre, des informations stockées dans le premier registre dans un dispositif de stockage (12) ; et
une unité de détection (24) qui détecte le deuxième registre parmi la pluralité de registres (13c) en utilisant des informations de planification dans lesquelles des adresses de départ de fonctions incluses dans le deuxième processus sont associées à des informations dans les registres qui sont utilisés par la fonction.

2. Dispositif informatique (10) selon la revendication 1, dans lequel
lorsque le deuxième registre est détecté par l'unité de détection (24), l'unité de sauvegarde (25) sauvegarde les informations stockées dans le premier registre dans le deuxième registre et, lorsque le deuxième registre n'est pas détecté par l'unité de détection (24), l'unité de sauvegarde sauvegarde les informations stockées dans le premier registre dans le dispositif de stockage (12).

3. Dispositif informatique selon la revendication 2, dans lequel l'unité de détection (24) extrait, à partir des informations de planification sur la base d'un compteur de programme qui indique une position de départ du deuxième processus, des registres de planification qui sont planifiés pour être utilisés par le deuxième processus et détecte, en tant que deuxième registre, un registre qui n'est pas inclus dans les registres de planification.

4. Dispositif informatique selon la revendication 2, comprenant en outre une unité de compilation (21) qui crée, lorsqu'un programme dans lequel est décrit le contenu de chacun des processus est compilé, les informations de planification en extrayant des informations qui sont stockées dans un registre et qui sont utilisées par chacune des fonctions pour chaque fonction et qui ajoute les informations de planification pour exécuter des données binaires du programme, dans lequel
lorsque le programme est exécuté, l'unité de détection acquiert les informations de planification à partir des données binaires exécutées.

5. Dispositif informatique selon la revendication 3, dans lequel l'unité de détection (24) extrait, à partir des informations de planification associées à un troisième processus qui est exécuté après le deuxième processus, sur la base d'un compteur de programme qui indique une position de départ du troisième processus, des registres de planification qui sont planifiés pour être utilisés par le troisième processus et détecte, en tant que deuxième registre parmi les registres de planification qui sont associés au deuxième processus, un registre de planification qui n'est pas inclus dans les registres de planification associés au troisième processus.

6. Dispositif informatique selon la revendication 1, dans lequel, lorsqu'un processus est permuté du deuxième processus en un troisième processus qui utilise le premier registre, l'unité de sauvegarde (25) sauvegarde, lorsque le troisième processus ne planifie pas d'utiliser un troisième registre, des informations stockées dans le premier registre qui est utilisé par le premier processus dans le troisième registre et sauvegarde, lorsque le troisième processus planifie d'utiliser le troisième registre, des informations stockées dans le premier registre dans le dispositif de stockage (12).

7. Procédé de commande de processus comprenant :
la sauvegarde, lorsqu'un processus qui est exécuté est permuté d'un premier processus en un deuxième processus et lorsque le deuxième processus ne planifie pas d'utiliser un deuxième registre d'une pluralité de registres (13c) qui stockent des informations qui sont utilisées par chaque processus pour exécuter un traitement, des informations stockées dans un premier registre qui est utilisé par le premier processus dans le deuxième registre ; et
la sauvegarde, lorsque le deuxième processus planifie d'utiliser le deuxième registre, des informations stockées dans le premier registre dans un dispositif de stockage (12),
dans lequel le deuxième registre parmi la pluralité de registres (13c) est détecté en utilisant des informations de planification dans lesquelles des adresses de départ de fonctions incluses dans le deuxième processus sont associées à des informations dans les registres qui sont utilisés par la fonction.

8. Support d'enregistrement lisible par ordinateur dans lequel est stocké un programme de commande de processus qui, lorsqu'il est exécuté, amène le dispositif informatique selon la revendication 1 à exécuter un processus de commande comprenant :
la sauvegarde, lorsqu'un processus qui est exécuté est permuté d'un premier processus en un deuxième processus et lorsque le deuxième processus ne planifie pas d'utiliser un deuxième registre d'une pluralité de registres (13c) qui stockent des informations qui sont utilisées par chaque processus pour exécuter un traitement, des informations stockées dans un premier registre qui est utilisé par le premier processus dans le deuxième registre ; et
la sauvegarde, lorsque le deuxième processus planifie d'utiliser le deuxième registre, des informations stockées dans le premier registre dans un dispositif de stockage (12),
dans lequel le deuxième registre parmi la pluralité de registres (13c) est détecté en utilisant des informations de planification dans lesquelles des adresses de départ de fonctions incluses dans le deuxième processus sont associées à des informations dans les registres qui sont utilisés par la fonction.
